(19) Europäisches Patentamt / European Patent Office / Office européen des brevets

(11) **EP 4 455 199 A1**

(12) **EUROPEAN PATENT APPLICATION**
published in accordance with Art. 153(4) EPC

(43) Date of publication:
**30.10.2024  Bulletin 2024/44**

(21) Application number: **22911251.1**

(22) Date of filing: **21.12.2022**

(51) International Patent Classification (IPC):
*C08J 9/28* (2006.01)       *C08G 73/10* (2006.01)

(52) Cooperative Patent Classification (CPC):
**C08G 73/10; C08J 9/28**

(86) International application number:
**PCT/JP2022/046997**

(87) International publication number:
**WO 2023/120549 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.12.2021  JP 2021208826**

(71) Applicant: **I.S.T Corporation**
**Otsu-shi, Shiga 520-2153 (JP)**

(72) Inventor: **MEZAKI FUJII Maki**
**Otsu-shi, Shiga 520-2153 (JP)**

(74) Representative: **TBK**
**Bavariaring 4-6**
**80336 München (DE)**

(54) **POROUS POLYIMIDE FILM, AND METHOD FOR PRODUCING SAME**

(57)    The objective of the present invention is to provide a porous polyimide film which can be suitably used as an electric insulating film, a frequency selection film, or the like in a flexible substrate (FPC) or the like. In the method for producing a porous polyimide film according to the present invention, a poly(amic acid) solution containing (a) a poly(amic acid) obtained by polymerizing an aromatic tetracarboxylic dianhydride containing at least pyromellitic dianhydride and an aromatic diamine containing at least 4,4 ' - diaminodiphenyl ether, (b) an organic polar solvent that is a good solvent for the poly(amic acid), and (c) a hydrophobic solvent that is a poor solvent for the poly(amic acid), dissolves in the organic polar solvent, evaporates less readily than the organic polar solvent at the same temperature and pressure, and has a logP in the range of 4.00 or more and 6.00 or less is dried and then baked to obtain a porous polyimide film.

EP 4 455 199 A1

**Description**

## TECHNICAL FIELD

The present invention relates to a porous polyimide film which can be suitably used as an electrical insulating film, a frequency selective film or the like in a flexible printed circuit (FPC) or the like, and method for producing the same.

## BACKGROUND ART

A porous material made from polyimide resins having excellent physical properties such as mechanical strength, chemical properties such as heat resistance and chemical resistance, and electrical properties such as low dielectric constant and low dielectric loss tangent are used in various industrial applications as useful materials having these properties.

For example, Japanese Patent Application Laid-Open No. S49-45152 discloses a method for producing a porous polyimide film, which comprises casting a solution of a poly(amic acid) obtained by polymerization reaction of an aromatic tetracarboxylic dianhydride and an aromatic diamine into a liquid thin film, and precipitating the thin film while imidizing the thin film in a poor solvent.

Further, Japanese Patent Application Laid-Open No. H9-100363 discloses a low dielectric constant plastic insulating film containing a plastic having a porosity of 10 vol% or more and having a heat resistant temperature of 100 °C or more and a dielectric constant of 2.5 or less as a heat-resistant low dielectric constant plastic insulating film used for printed circuit boards of electronic devices and slot insulators of rotary machines.

As a method for producing a porous polyimide, there are known a method of forming a porous film by bringing a polymer solution prepared by dissolving a polyimide resin in an aprotic good solvent into contact with a poor solvent such as water having compatibility with the aprotic good solvent, generally called dry wet spinning method (for example, Japanese Patent Application Laid-Open No. H11-537), and a method using a phase separation phenomenon of a polymer solution, such as a thermally induced phase separation method of forming a porous film by changing the temperature of a polymer solution (for example, Japanese Patent Application Laid-Open No. H6-166116).

## PRIOR ART DOCUMENT

## PATENT DOCUMENT

Patent Document 1: Japanese Patent Application Laid-Open No. S49-45152
Patent Document 2: Japanese Patent Application Laid-Open No. H9-100363
Patent Document 3: Japanese Patent Application Laid-Open No. H11-537
Patent Document 4: Japanese Patent Application Laid-Open No. H6-166116

## SUMMARY OF THE INVENTION

## PROBLEMS TO BE SOLVED BY THE INVENTION

However, in the above-mentioned method for producing a porous polyimide film, when a relatively thin, porous polyimide film is produced, it is difficult to increase the porosity of the film. In view of such circumstances, in the industrial field, the appearance of a porous polyimide film which is relatively thin but has a high porosity has been desired.

The objective of the present invention is to provide a porous polyimide film which is relatively thin but has a high porosity and can be suitably used as an electric insulating film, a frequency selection film or the like in a flexible substrate (FPC) or the like.

## MEANS FOR SOLVING THE PROBLEMS

In a method for producing a porous polyimide film according to a first aspect of the present invention, a porous polyimide film is obtained by drying and then baking a poly(amic acid) solution including:

(a) a poly(amic acid) obtained by polymerizing an aromatic tetracarboxylic dianhydride containing at least pyromellitic dianhydride and an aromatic diamine containing at least 4,4' -diaminodiphenyl ether;
(b) an organic polar solvent that is a good solvent for the poly(amic acid); and
(c) a hydrophobic solvent that is a poor solvent for the poly(amic acid), dissolves in the organic polar solvent, evaporates less readily than the organic polar solvent at the same temperature and pressure, and has a logP in the range of 4.00 or more and 6.00 or less.

In the method for producing a porous polyimide film according to the first aspect of the present invention, the hydrophobic solvent preferably has a boiling point at 1 atm in the range of 280 °C or more and 350 °C or less.

In the method for producing a porous polyimide film according to the first aspect of the present invention, the poly(amic acid) solution preferably contains 60% by mass or more of a poly(amic acid) obtained by polymerizing pyromellitic dianhydride and 4,4'-diaminodiphenyl ether.

The porous polyimide film according to the second aspect of the present invention contains at least a polyimide resin obtained from a poly(amic acid) obtained by polymerizing pyromellitic dianhydride and 4,4'-diaminodiphenyl ether. At least the hydrophobic poor solvent remains in the porous polyimide film.

The porous polyimide film according to the third aspect of the present invention contains at least a polyimide resin obtained from a poly(amic acid) obtained by polymerizing pyromellitic dianhydride and 4,4'-diaminodiphenyl ether. The porous polyimide film has an exothermic peak in a temperature range of 350 °C or more and 450 °C or less when the differential thermal and thermogravimetry (TG/DTA) thereof are measured at a temperature increase rate of 5 °C/min.

## EFFECTS OF THE INVENTION

The porous polyimide film according to the present invention is relatively thin but has a high porosity, and can be suitably used as an electrical insulating film, a frequency selective film or the like in a flexible printed circuit (FPC) or the like. The method for producing a porous polyimide film according to the present invention can produce such a porous polyimide.

## BRIEF DESCRIPTION OF THE DRAWINGS

[FIG. 1] A measurement chart obtained when the porous polyimide films obtained in working example 1, working example 3, working example 4 and comparative Example 8 were heated from room temperature to 500 °C at a temperature increase rate of 5 °C/min using a simultaneous differential thermal/thermogravimetry (TG/DTA) analyzer.
[FIG. 2] A digital microscope photograph of the porous polyimide film after the perforation processing obtained in working example 1.

## DETAILED DESCRIPTION OF THE INVENTION

In the method for producing a porous polyimide film according to the embodiment of the present invention, a poly(amic acid) solution containing a poly(amic acid), an organic polar solvent and a hydrophobic solvent is dried and then baked to obtain a porous polyimide film. The poly(amic acid) is obtained by polymerizing an aromatic tetracarboxylic dianhydride containing at least pyromellitic dianhydride and an aromatic diamine containing at least 4,4'-diaminodiphenyl ether. The organic polar solvent is a good solvent for the poly(amic acid). The hydrophobic solvent is a poor solvent for the poly(amic acid) and dissolves in the organic polar solvent. Also, the hydrophobic solvent is less likely to evaporate than an organic polar solvent at the same temperature and pressure. The hydrophobic solvent has a logP in the range of 4.00 or more and 6.00 or less.

In the method for producing a porous polyimide film according to the embodiment of the present invention, the hydrophobic solvent preferably has a boiling point higher than that of the organic polar solvent. The hydrophobic solvent preferably has a boiling point at 1 atm in the range of 280 °C or more and 350 °C or less, and more preferably in the range of 300 °C or more and 350 °C or less. The organic polar solvent preferably has a boiling point at 1 atm in the range of 60 °C or more and 270 °C or less. The value obtained by subtracting the boiling point of the organic polar solvent from the boiling point of the hydrophobic solvent is preferably in the range of 15 °C or more and 260 °C or less, more preferably in the range of 50 °C or more and 180 °C or less, and still more preferably in the range of 70 °C or more and 160 °C or less.

In the embodiment of the present invention, the poly(amic acid) may be synthesized by polymerizing an aromatic tetracarboxylic dianhydride and an aromatic diamine in a mixed solvent of an organic polar solvent and a hydrophobic poor solvent, or may be synthesized by polymerizing an aromatic tetracarboxylic dianhydride and an aromatic diamine in an organic polar solvent. In the latter case, the hydrophobic poor solvent is added to the obtained poly(amic acid) solution.

In the synthesis of the poly(amic acid) according to the embodiment of the present invention, an aromatic tetracarboxylic dianhydride other than pyromellitic dianhydride may be used within a range not impairing the gist of the present invention. Examples of such aromatic tetracarboxylic dianhydrides include 1,2,5,6-naphthalenetetracarboxylic dianhydride, 1,4,5,8-naphthalenetetracarboxylic dianhydride, 2,3,6,7-naphthalenetetracarboxylic dianhydride, 2,2',3,3'-biphenyltetracarboxylic dianhydride, 2,3,3',4'-biphenyltetracarboxylic dianhydride, 3,3',4,4'-biphenyltetracarboxylic dianhydride (BPDA), 2,2',3,3'-benzophenonetetracarboxylic dianhydride, 2,3,3',4'-benzophenonetetracarboxylic dianhydride, 3,3',4,4'-benzophenonetetracarboxylic dianhydride (BTDA), bis(3,4-dicarboxyphenyl) sulfone dianhydride, bis(2,3-dicarboxyphenyl) methane dianhydride, bis(3,4-dicarboxyphenyl) methane dianhydride, 1,1-bis(2,3-dicarboxyphenyl) ethane dianhydride, 1,1-bis(3,4-dicarboxyphenyl) ethane dianhydride, 2,2-bis[3,4-(dicarboxyphenoxy) phenyl] propane dianhydride (BPADA), 4,4'-(hexafluoroisopropylidene) diphthalic anhydride, oxydiphthalic anhydride (ODPA), bis(3,4-dicarboxyphenyl) sulfone dianhydride, bis(3,4-dicarboxyphenyl) sulfoxide dianhydride, thiodiphthalic dianhydride, 3,4,9,10-perylenetetracarboxylic dianhydride, 2,3,6,7-anthracenetetracarboxylic dianhydride, 1,2,7,8-phenanthrenetetracarboxylic dianhydride, 9,9-bis(3,4-dicarboxyphenyl) fluorene dianhydride, 9,9-bis[4-(3,4'-dicarboxyphenoxy) phenyl] fluorene dianhydride, and other aromatic tetracarboxylic dianhydrides, cyclobutanetetracarboxylic dianhydride, 1,2,3,4 cyclopentanetetracarboxylic dianhydride, 2,3,4,5 tetrahydrofurantetracarboxylic dianhydride, 1,2,4,5 cyclohexanetetracarboxylic dianhydride, 3, 4-dicarboxy-1-cyclohexylsuccinic dianhydride, and 3,4-dicarboxy-1, 1,2,3,4 tetrahydro-1-naphthalenesuccinic dianhydride. Note that, from the viewpoint of solubility in a hydrophobic solvent and from the viewpoint of obtaining a porous polyimide film having a high porosity, it is preferable that most of the aromatic tetracarboxylic dianhydride is pyromellitic dianhydride.

In the synthesis of the poly(amic acid) according to the embodiment of the present invention, an aromatic diamine other than 4,4'-diaminodiphenyl ether may be used within a range not impairing the gist of the present invention. Examples of such aromatic diamines include paraphenylenediamine (PPD), metaphenylenediamine (MPDA), 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, 2,2-bis(trifluoromethyl) -4,4'-diaminobiphenyl, 3,3'-diaminodiphenylmethane, 4,4'-diaminodiphenylmethane (MDA), 2,2-bis(4-aminophenyl) propane, 3,3'-diaminodiphenylsulfone (33DDS), 4,4'-diaminodiphenylsulfone (44DDS), 3,3'-diaminodiphenylsulfide, 4,4'-diaminodiphenylsulfide, 3,3'-diaminodiphenylether, 3,4'-diaminodiphenylether (34ODA), 1,5-diaminonaphthalene, 4,4'-diaminodiphenyldiethylsilane, 4,4'-diaminodiphenylsilane, 4,4'-diaminodiphenylethylphosphineoxide, 1,3-bis(3-aminophenoxy) benzene (133APB), 1,3-bis(4-aminophenoxy) benzene (134APB), 1,4-bis(4-aminophenoxy) benzene, bis[4-(3-aminophenoxy) phenyl] sulfone (BAPSM), bis[4-(4-aminophenoxy) phenyl] sulfone (BAPS), 2,2-bis[4-(4-aminophenoxy) phenyl] propane (BAPP), 2,2-bis(3-aminophenyl) 1,1,1,3,3,3-hexafluoropropane, 2,2-bis(4-aminophenyl) 1,1,1,3,3,3-hexafluoropropane, 9,9-bis(4-aminophenyl) fluorene and other aromatic diamines. Note that, from the viewpoint of solubility in a hydrophobic solvent and from the viewpoint of obtaining a porous polyimide film having a high porosity, it is preferable that most of the aromatic diamine is 4,4'-diaminodiphenyl ether.

The poly(amic acid) obtained from the aromatic tetracarboxylic dianhydride and the aromatic diamine preferably contains 60% by mass or more of a poly(amic acid) obtained by polymerizing pyromellitic dianhydride and 4,4'-diaminodiphenyl ether. This is because, in the method for producing a porous polyimide film according to the embodiment of the present invention, the poly(amic acid) does not gel, and the porous polyimide film can maintain its shape well.

The solid content concentration of the poly(amic acid) solution according to the embodiment of the present invention is not particularly limited as long as the solid content concentration is in a viscosity range suitable for the production of a porous polyimide film, but is preferably in the range of 5% by mass or more and 30% by mass or less, more preferably in the range of 5% by mass or more and 27% by mass or less, and still more preferably in the range of 5% by mass or more and 25% by mass or less.

Examples of the hydrophobic solvents used in the method for producing a porous polyimide film according to the embodiment of the present invention include (1,7,7-trimethylbicyclo[2.2.1]hept-2-yl) cyclohexan-1-ol (boiling point 308 °C, logP 4.96), 4-(5,5,6-trimethylbicyclo[2.2.1]heptan-2-yl) cyclohexanol (boiling point 324.5 °C, logP 4.48), 3-[2,3,3-trimethylbicyclo[221]hept-5-yl] cyclohexanol (boiling point 312 °C, logP 4.47), and 1,2,3,4,4a,5,6,7-octahydro-2,5,5-trimethyl-2-naphthol (boiling point 280.1 °C, logP 4. 07) or the like.

Hydrophobic solvents such as 1-hydroxycyclohexyl phenyl ketone (boiling point 339 °C, logP 2.04), 4-(4-hydroxy-4-methylpentyl)-3-cyclohexenecarbaldehyde (boiling point 290 °C, logP 2. 78), and 4,4'-bicyclohexanol (boiling point 324 °C, logP 2. 49) can also be used in combination with the above-mentioned hydrophobic solvents within a range that does not impair the gist of the present invention.

As described above, the logP of the hydrophobic solvent is in the range of 4.00 or more and 6.00 or less. The logP is calculated by a known calculation method. Specifically, the logP is determined by calculation using commercially available software or the like with a quantitative structure-activity relationship algorithm. Examples of such commercially available software include ChemdrawPro12.0 or the like. In addition, for the calculation of logP, an online site of http://www.vcclab.org/lab/alogps/start.html can also be used.

Examples of the organic polar solvent used in the method for producing a porous polyimide film according to the embodiment of the present invention include amide solvents such as N, N-dimethylformamide (boiling point 153 N, N-dimethylacetamide (boiling point 165 °C), 3-methoxy-N,N-dimethylpropanamide (boiling point 215 °C), dimethylisobutyramide (boiling point 175 °C), N-methyl-2-pyrrolidone (boiling point 202 °C), and hexamethylphosphoric triamide (boiling point 233 °C); ester solvents such as gamma-butyrolactone (boiling point 204 °C); ether solvents such as 1, 2-dimethoxyethane (boiling point 85 °C), diglyme (boiling point 162 °C), triglyme (boiling point 216 °C), tetrahydrofuran (boiling point 66 °C), 1, 3-dioxolane (boiling point 74 °C), and 1, 4-dioxane (boiling point 101 °C); ketone solvents such as cyclopentanone (boiling point 131 °C); and urea solvents such as tetramethyl urea (boiling point 176.5 °C), N, N-dimethylethylurea (boiling point 262 °C), and 1, 3-dimethyl-2-imidazolidinone (boiling point 225 °C). The organic polar solvent is preferably a urea solvent or an amide solvent, and more preferably an amide solvent, in order to maintain good solubility of the poly(amic acid) and good reactivity between the aromatic tetracarboxylic dianhydride and the aromatic diamine. As the amide-solvent, N,N-dimethylformamide, N,N-dimethylacetamide (DMAC), and N-methyl-2-pyrrolidone (NMP) are particularly preferable. These organic polar solvents may be used alone or in combination. Further, aromatic hydrocarbons such as toluene and xylene may be mixed with the organic polar solvent.

The poly(amic acid) solution thus obtained can be used as it is for the production of a porous polyimide film, but if necessary, the solvent may be removed from the poly(amic acid) solution or added to the poly(amic acid) solution before the use for the production of a porous polyimide film.

In addition, an imidization catalyst, an organic phosphorus-containing compound, inorganic fine particles, or the like may be added to the poly(amic acid) solution according to the embodiment of the present invention, if necessary.

Examples of the imidization catalyst include a substituted or unsubstituted nitrogen-containing heterocyclic compound, an N-oxide compound of the nitrogen-containing heterocyclic compound, a substituted or unsubstituted amino acid compound, an aromatic hydrocarbon compound or an aromatic heterocyclic compound having a hydroxyl group. In particular, lower alkylimidazoles such as 1, 2-dimethylimidazole, N-methylimidazole, N-benzyl-2-methylimidazole, 2-methylimidazole, 2-ethyl-4-methylimidazole, and 5-methylbenzimidazole; benzimidazoles such as N-benzyl-2-methylimidazole; and substituted pyridines such as isoquinoline, 3,5-dimethylpyridine, 3,4-dimethylpyridine, 2,5-dimethylpyridine, 2,4-dimethylpyridine, and 4-n-propylpyridine can be preferably used. The imidization catalyst is preferably added in an amount of 0.01 to 2 equivalents, more preferably 0.02 to 1 equivalent, relative to the amide acid unit of the poly(amic acid). The addition of an imidization catalyst to the poly(amic acid) solution may improve the properties of the resulting porous polyimide film, particularly the elongation and edge tear resistance.

Examples of the organic phosphorus-containing compound include phosphates such as monocaproyl phosphate, monooctyl phosphate, monolauryl phosphate, monomyristyl phosphate, monocetyl phosphate, monostearyl phosphate, triethylene glycol monotridecyl ether monophosphate, tetraethylene glycol monolauryl ether monophosphate, diethylene glycol monostearyl ether monophosphate, dicaproyl phosphate, dioctyl phosphate, dicapryl phosphate, dilauryl phosphate, dimyristyl phosphate, dicetyl phosphate, distearyl phosphate, tetraethylene glycol mononeopentyl ether diphosphate, triethylene glycol monotridecyl ether diphosphate, tetraethylene glycol monolauryl ether diphosphate, and diethylene glycol monostearyl ether diphosphate; and amine salts of these phosphates. Examples of the amine in the amine salt include ammonia, monomethylamine, monoethylamine, monopropylamine, monobutylamine, dimethylamine, diethylamine, dipropylamine, dibutylamine, trimethylamine, triethylamine, tripropylamine, tributylamine, monoethanolamine, diethanolamine, and triethanolamine or the like.

Examples of the inorganic fine particles include inorganic oxide powders such as titanium dioxide powder, silicon dioxide (silica) powder, magnesium oxide powder, aluminum oxide (alumina) powder, and zinc oxide powder; inorganic nitride powders such as silicon nitride powder and titanium nitride powder; inorganic carbide powders such as silicon carbide powder; and inorganic salt powders such as calcium carbonate powder, calcium sulfate powder, and barium sulfate powder. These inorganic fine particles may be used alone or in combination. As a method for uniformly dispersing these inorganic fine particles in the poly(amic acid) solution, a known method can be used.

Next, the porous polyimide film according to the embodiment of the present invention contains at least a polyimide resin obtained from a poly(amic acid) obtained by polymerizing pyromellitic dianhydride and 4,4'-diaminodiphenyl ether. At least the hydrophobic solvent remains in the porous polyimide film. In this porous polyimide film, the hydrophobic solvent often remains in the pores. Therefore, water absorption of the porous polyimide film is suppressed, and a dimensional change or the like due to expansion of the porous polyimide film can be suppressed.

The porous polyimide film according to the embodiment of the present invention contains at least a polyimide resin obtained from a poly(amic acid) obtained by polymerizing pyromellitic dianhydride and 4,4'-diaminodiphenyl ether. The porous polyimide film has an exothermic peak in a temperature range of 350 °C to 450 °C when the differential thermal and thermogravimetry (TG/DTA) thereof are measured at a temperature increase rate of 5 °C/min. The weight loss rate of the porous polyimide film in the same temperature region is preferably in the range of 0.5% or more and 3.0% or less, and more preferably in the range of 0.5% or more and 2.5% or less.

The porous polyimide film according to the embodiment of the present invention preferably has a thermal conductivity of 0.2 or less, and more preferably 0.17 or less. The lower limit of the thermal conductivity is not particularly limited but is larger than the thermal conductivity of air. The lower the thermal conductivity, the higher the heat insulation of the porous polyimide film, which is preferable.

The polyimide film according to the embodiment of the present invention preferably has a dielectric constant (10GHz) in the range of 1.00 or more and 2.5 or less, and more preferably in the range of 1.4 or more and 2.0 or less. The dielectric loss tangent (10GHz) is preferably in the range of 0.0001 or more and 0.02 or less, and more preferably in the range of 0.005 or more and 0.015 or less. The lower the dielectric properties (dielectric constant, dielectric loss tangent), the higher the communication properties at high frequencies, which is preferable.

The porous polyimide film according to the embodiment of the present invention has a porosity of preferably 50% or more and less than 80%, more preferably 50% or more and less than 70%, and still more preferably 60% or more and less than 70%. This is because when the porosity is within the above-described range, the balance between the thermal conductivity, the dielectric characteristics, or the like and the mechanical strength is maintained well.

In the porous polyimide film according to the embodiment of the present invention, it is preferable that independent pores are formed so that the pore diameter gradually increases from the surface side in contact with the atmosphere toward the surface side in contact with the base material, but continuous pores may be partially present.

In particular, the porous polyimide film according to the embodiment of the present invention can be suitably used at least as a base film (a base film for forming a metal layer). For the purpose of improving the rigidity and electrical insulation of the porous polyimide film, the porous polyimide film may be laminated. The method for laminating the porous polyimide film is not particularly limited, and the porous polyimide film may be directly laminated, or the porous polyimide film and the porous polyimide film may be laminated (bonded) via an adhesive layer (adhesive agent layer).

The adhesive component constituting the adhesive layer is not particularly limited, and may be, for example, any of a thermosetting resin and a thermoplastic resin.

The metal forming the metal layer (metal foil) is not particularly limited, and examples thereof include copper and an alloy thereof, stainless steel and an alloy thereof, nickel and an alloy thereof, and aluminum and an alloy thereof or the like. Of the metals mentioned above, copper and its alloys are particularly preferred. Examples of the copper alloy include a copper alloy containing copper and at least one metal selected from nickel, zinc, iron, chromium, cobalt, molybdenum, tungsten, vanadium, beryllium, titanium, tin, manganese, aluminum, phosphorus, silicon or the like. Copper and its alloys are preferably used in circuit processing. Examples of the circuit processing method for copper and copper alloys include a rolling method, an electrolytic plating method, and a sputtering method.

The metal layer and the porous polyimide film are laminated to obtain a metal foil-clad laminate. That is, the porous polyimide film according to the embodiment of the present invention can be suitably used as a base film of a metal foil-clad laminate. A rust-preventive layer, a heat-resistant layer (for example, a plating treatment with chromium, zinc, or the like), a silane coupling agent layer, or the like may be formed on the surface of the metal foil.

The thickness of the metal layer is not particularly limited, and is, for example, about 1 to 150 pm (e.g., 3 to 50 pm).

The metal foil-clad laminate is not particularly limited in the form of lamination as long as it includes the porous polyimide film according to the embodiment of the present invention and a metal layer. Depending on the intended use of the porous polyimide film according to the embodiment of the present invention (e.g., whether the film is used as a base film or a coverlay), the porous polyimide film according to the embodiment of the present invention may be directly laminated on a metal layer, or may be laminated (bonded) on a metal foil via an adhesive layer (adhesive agent layer).

The adhesive component constituting the adhesive layer is not particularly limited, and may be, for example, any of a thermosetting resin and a thermoplastic resin.

The metal foil-clad laminate can be subjected to through-hole processing because the pores in the porous polyimide film are relatively small. By forming desired pattern wiring by etching the metal layer of the metal foil-clad laminate, various miniaturized and highly densified components can be mounted on the pattern wiring. Of course, the metal foil-clad laminate according to the embodiment of the present invention can be used not only for the above-mentioned applications but also for various applications. In addition, the metal foil-clad laminate is excellent in dielectric properties due to the presence of the porous polyimide film, and therefore is effective as a component of a mobile information communication device such as a multifunctional mobile phone or a tablet terminal. More particularly, the present invention is expected to be used as parts for 5G terminals capable of meeting the requirements of ultra-high speed, large capacity, low delay, multiple simultaneous connections or the like, and to be applied to parts for automobile high-speed switching power supplies, anti-collision millimeter wave radar devices, advanced driver assistance systems, artificial intelligences or the like.

The polyimide film according to the embodiment of the present invention preferably has a higher air permeability than 1500 s. This is because when the air permeability is higher than that of the 1500 s, it can be confirmed that not continuous cells but independent cells are formed.

<Production of Poly(Amic Acid) Solution>

As described above, the poly(amic acid) in the embodiment of the present invention may be synthesized by polymerizing an aromatic tetracarboxylic dianhydride and an aromatic diamine in a mixed solvent of an organic polar solvent and a hydrophobic poor solvent, or may be synthesized by polymerizing an aromatic tetracarboxylic dianhydride and an aromatic diamine in an organic polar solvent. In the latter case, the hydrophobic poor solvent is added to the obtained poly(amic acid) solution.

The organic polar solvent and the hydrophobic solvent used herein are the same as those described above.

The aromatic tetracarboxylic dianhydride and the diamine are preferably polymerized in substantially equimolar amounts. The polymerization temperature is preferably about 100 °C or lower, more preferably 80 °C or lower, still more preferably 0 to 60 °C, particularly preferably 20 to 60 °C. The polymerization time is preferably about 0.2 hours or more, and more preferably 0.3 to 60 hours.

The viscosity of the poly(amic acid) solution may be appropriately adjusted depending on the object to be molded into the porous polyimide film, the molding method (coating, casting, etc.), and the purpose of production. From the viewpoint of workability, the poly(amic acid) solution (polyimide precursor solution) preferably exhibits a rotational viscosity of about 0.1 to 5000 poise, more preferably 0.5 to 2000 poise, and even more preferably 1 to 2000 poise, as measured at 30 °C. Therefore, it is preferable that the viscosity is adjusted by carrying out the above-mentioned polymerization reaction or diluting or concentrating the obtained poly(amic acid) solution to such an extent that the obtained poly(amic acid) solution exhibits the above-mentioned viscosity.

<Formation of Porous Polyimide Film from Poly(Amic Acid) Solution>

The method for forming a porous polyimide film from a poly(amic acid) solution is not particularly limited, and a known method can be used. More specifically, the porous polyimide film is produced by casting and applying a poly(amic acid) solution or a poly(amic acid) solution composition onto a support body, and then heating the solution or composition to mold it to such an extent that it can be peeled off from the support body. The heating temperature and heating time for forming the porous polyimide film can be appropriately determined. A preferable example of the combination of the heating temperature and the heating time is a temperature of 100 to 180 °C and a time of 1 to 60 minutes.

The support body is not particularly limited as long as the poly(amic acid) solution can be cast thereon, but a smooth substrate is preferably used. Examples of such a substrate include a drum and a belt made of a metal such as stainless steel or the like.

In this method, the solvent may be removed to such an extent that the film can be peeled off from the support body. The imidization may be performed before the release from the support body or after the release from the support body. In the latter case, for example, the imidization can be performed by heating while conveying the obtained film while gripping both ends in the width direction of the film with a tenter device. The heating temperature in such a case is preferably equal to or higher than the boiling point of the hydrophobic solvent from the viewpoint of promoting toughening and porosification of the polyimide film and from the viewpoint of removing the hydrophobic solvent as much as possible. The heating time can be appropriately determined but is preferably in the range of 0.5 hours or more and 5 hours or less from the viewpoint of promoting the toughening and the porosification of the polyimide film and from the viewpoint of removing the hydrophobic solvent as much as possible.

An example of the production of a porous polyimide film will be described below. First, a poly(amic acid) solution is cast on a surface of an appropriate support body to form a poly(amic acid) solution having a uniform thickness of about 10 to 2000 pm (more preferably about 20 to 1000 pm) in a liquid film form. Then, the poly(amic acid) solution in the form of a liquid film is dried at 80 °C to 150 °C for 10 minutes to 1 hour using a heat source such as hot air or infrared rays, and the film formed on the support body is peeled off from the support body and fixed to a tenter or the like, and the film is heated rising the temperature from 150 °C to 300 °C for 30 minutes to 3 hours and further baked at 300 °C to 400 °C for 20 minutes to 1 hour to form a porous polyimide film. In this case, imidization proceeds during the final baking.

<Working Examples and Comparative Examples>

The present invention will be described in more detail below with reference to Working Examples and Comparative Examples, but the present invention is not limited to these Working Examples. Working Example 1

1. Preparation of Poly(Amic Acid) Solution

To 91 g of N-methyl-2-pyrrolidone, 7.46 g of 4,4'-diaminodiphenyl ether (ODA) as an aromatic diamine and 7.96 g of pyromellitic dianhydride (PMDA) as an aromatic tetracarboxylic dianhydride were added, and the mixture was stirred to obtain a poly(amic acid) solution (composition PMDA/ODA, solid content 14.5 parts by mass). Next, 30.4 g of (1,7,7-trimethylbicyclo[2.2.1] hept-2-yl) cyclohexan-1-ol (boiling point 308 °C, logP 4. 96) as a hydrophobic poor medium was added to the poly(amic acid) solution, and the mixture was stirred to obtain a desired poly(amic acid) liquid (composition PMDA/ODA, solid content 11.2 parts by mass).

2. Forming of Porous Polyimide Film

The above-mentioned poly(amic acid) solution was cast on a glass substrate to form a coating film of the poly(amic acid) solution, and the glass plate on which the coating film was formed was put in an oven at 130 °C to dry the coating film for 30 minutes. Next, the glass plate was taken out from the oven, the film formed on the glass substrate was peeled off from the glass substrate and fixed the film to a tenter, and then the film was put in the oven and the temperature in the oven was raised from 150 °C to 350 °C over 2 hours. After the temperature in the oven reached 350 °C, the film was baked by maintaining the temperature for 20 minutes to obtain a desired porous polyimide film. The thickness of the porous polyimide film was 105.5 pm.

3. Evaluation of Properties

(1) Measurement of Thermal Conductivity

The thermal conductivities of the polyimide films were measured with reference to JIS R2616. In detail, the polyimide film was cut into 2cm × 2cm pieces, and then the transistor was attached to one surface of the film piece with a thermal conductive grease, and a heat sink (made of aluminum) was attached to the other surface with a thermal conductive grease. Next, the transistor was heated by applying a current to the transistor until the temperature of the transistor reached 60 °C, the porous polyimide film was heated for 3 minutes by the transistor that had reached 60 °C, and the surface temperature A of the porous polyimide film on the transistor side and the surface temperature B of the porous polyimide film on the heat sink side were measured using a thermocouple. In this case, the power consumption of the transistor was measured, and the thermal resistance was calculated from the following equation using the temperatures A and B of the surfaces and the power consumption of the transistor.

Thermal resistance = (surface temperature A (°C)-surface temperature B(°C)) / power consumption (W)

The thermal resistance calculated by the above equation was used to calculate the thermal conductivity from the following equation, and the thermal conductivity was 0.14 W/mK.

Thermal conductivity = film thickness of porous polyimide film/(cross-sectional area of transistor × thermal resistance)

(2) Measurement of Dielectric Constant (10GHz)

The dielectric constant ($\varepsilon$) and the dielectric loss tangent of the porous polyimide film at 10 GHz frequencies were measured using a vector network analyzer (manufactured by Agilent Technologies, Inc., trade name: Vector Network Analyzer E8363C) and a split post dielectric resonator (SPDR). As a result, the dielectric constant was 1.68, and the dielectric loss tangent was 0.0083.

(3) Measurement of Porosity

The film thickness and mass of the porous polyimide film cut into a predetermined size were measured, and the porosity of the porous polyimide film was determined from the basis weight by the following formula. As a result, the porosity was 53.7 %.

$$\text{Porosity} = (1\text{-}w/(S{\times}d)/D) \times 100$$

In the above formula, S is the area of the porous polyimide film piece, d is the film thickness of the porous polyimide film piece, w is the measured mass of the porous polyimide film piece, and D is the density of the polyimide. The polyimide was 1.43 g / cm$^3$.

(4) Thermogravimetric Analysis

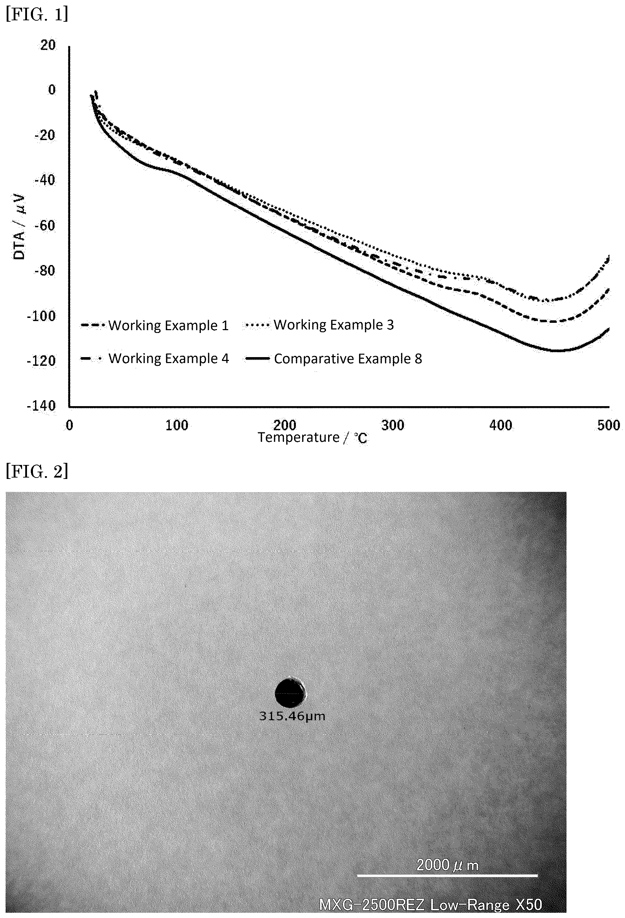

Using a simultaneous differential thermal/thermogravimetry (TG/DTA) analyzer "DTG-60" manufactured by Shimadzu Corporation, the porous polyimide film was heated from room temperature to 500 °C at a rate of temperature increase of 5 °C/min in an air atmosphere, and the porous polyimide film was subjected to thermogravimetry. As a result, an exothermic peak was observed at 370 °C (see Fig. 1), and the weight loss rate in the range of 350 °C to 450 °C was 0.9 %.
The weight loss rate is calculated by (weight (g) at 350 °C-weight (g) at 450 °C) / weight (g) at 350 °C × 100.

(5) Liquid chromatograph (HPLC) mass spectrometry

The porous polyimide film was immersed in methanol, and then the methanol was analyzed with a high-performance liquid chromatograph Chromaster manufactured by Hitachi, Ltd., and as a result, (1,7,7-trimethylbicyclo[2.2.1]hept-2-yl) cyclohexan-1-ol was detected. In the above-mentioned high-performance liquid chromatography Chromaster, CHIRALPAK IB (particle size 5 pm, inside diameter 4.6 mm, length 150 mm) manufactured by Daicel Chemical Industries, Ltd. was used as a column, THF was used as a moving phase, and a photodiode array detector was used as a detector. The photodiode array detector senses the UV-visible spectrum. The flow rate of the moving phase was 1 mL/min.

(6) Measurement of Air Permeability

The air permeability of the porous polyimide film was measured according to JIS P8117 (Gurley test method), and it was confirmed that the porous polyimide film had a higher air permeability than 1500s.

(7) Drilling Process

When the porous polyimide film was drilled with a drill having a 0. 3mm diameter, the film could be drilled without any problem. FIG. 2 shows a photograph of the porous polyimide film subjected to the perforation processing, which was observed at a magnification of 50 times using a digital microscope KH-1300 manufactured by Hirox Co., Ltd.

Working Example 2

A porous polyimide film was obtained in the same manner as in Working Example 1, except that the amount of (1,7,7-trimethylbicyclo[2.2.1]hept-2-yl) cyclohexan-1-ol was changed to 36. 5 g. At this time, the solid content of the poly(amic acid) solution was 10.1 parts by mass. The thickness of the obtained porous polyimide film was 107.9 pm.

The properties of the obtained porous polyimide film were measured by the same methods as in Woking Example 1, and the thermal conductivity was found to be 0. 13 W/mK, the dielectric constant (10GHz) was found to be 1.58, the dielectric loss tangent (10GHz) was found to be 0.0075, and the porosity was found to be 66.8%. In addition, as a result of thermogravimetric analysis, an exothermic peak was confirmed at 370 °C in this porous polyimide film, and the weight loss rate of the porous polyimide film was 1.0%. In addition, (1,7,7-trimethylbicyclo[2.2.1]hept-2-yl) cyclohexan-1-ol was detected from the porous polyimide film by HPLC mass spectrometry. It was also confirmed that the air permeability of the porous polyimide film was higher than that of 1500 s. Further, when the porous polyimide film was drilled with a drill having a 0. 3 mm diameter, the drilling was successfully performed without any problem.

Working Example 3

A porous polyimide film was obtained in the same manner as in Working Example 1, except that 30.4 g of (1,7,7-trimethylbicyclo[2.2.1]hept-2-yl) cyclohexan-1-ol was changed to 30.4 g of 4-(5,5,6-trimethylbicyclo[2.2.1]hepto-2-yl) cyclohexanol (boiling point 324.5 °C, logP 4.48). At this time, the solid content of the poly(amic acid) solution was 11.2 parts by mass. The thickness of the obtained porous polyimide film was 48.7 pm.

The properties of the obtained porous polyimide film were measured by the same methods as in Woking Example 1, and the thermal conductivity was found to be 0.13 W/mK, the dielectric constant (10GHz) was found to be 1.92, the dielectric loss tangent (10GHz) was found to be 0.0118, and the porosity was found to be 50.0%. In addition, as a result of thermogravimetric analysis, an exothermic peak was confirmed at 380 °C in this porous polyimide film (see FIG. 1), and the weight loss rate of the porous polyimide film was 0.8%. Further, 4-(5,5,6-trimethylbicyclo[2.2.1]hepto-2-yl) cyclohexanol was detected from the porous polyimide film by HPLC mass spectrometry. It was also confirmed that the air permeability of the porous polyimide film was higher than that of 1500 s. Further, when the porous polyimide film was drilled with a drill having a 0.3 mm diameter, the drilling was successfully performed without any problem.

Working Example 4

A porous polyimide film was obtained in the same manner as in Working Example 1, except that 30.4 g of (1,7,7-trimethylbicyclo[2.2.1]hept-2-yl) cyclohexan-1-ol was changed to 30.4 g of 1,2,3,4,4a,5,6,7-octahydro-2,5,5-trimethyl-2-naphthol (boiling point 280.1 °C, logP 4.07). At this time, the solid content of the poly(amic acid) solution was 11.2 parts by mass. The thickness of the obtained porous polyimide film was 86.1 pm.

The properties of the obtained porous polyimide film were measured by the same methods as in Working Example 1, and the thermal conductivity was found to be 0.15 W/mK, the dielectric constant (10GHz) was found to be 1.84, the dielectric loss tangent (10GHz) was found to be 0.0116, and the porosity was found to be 55.1 %. In addition, as a result of thermogravimetric analysis, an exothermic peak was confirmed at 375 °C in this porous polyimide film (see FIG. 1), and the weight loss rate of the porous polyimide film was 2.1 %. Further, 1,2,3,4,4a,5,6,7-octahydro-2,5,5-trimethyl-2-naphthol was detected from the porous polyimide film by HPLC mass spectrometry. It was also confirmed that the air permeability of the porous polyimide film was higher than that of 1500 s. Further, when the porous polyimide film was drilled with a drill having a 0. 3 mm diameter, the drilling was successfully performed without any problem.

Working Example 5

To 91 g of N-methyl-2-pyrrolidone, 4.22 g of p-phenylenediamine (PPD) as an aromatic diamine and 11.26 g of 3,3',4,4'-biphenyltetracarboxylic dianhydride (BPDA) as an aromatic tetracarboxylic dianhydride were added and stirred to obtain a poly(amic acid) solution (composition BPDA/PPD, solid content 14.5 parts by mass). Next, 63.6 g of the poly(amic acid) solution obtained in Working Example 1 (composition PMDA/ODA, solid content 14.5 parts by mass), 42.4 g of the above-mentioned poly(amic acid) solution (composition BPDA/PPD, solid content 14.5 parts by mass), and 30.4 g of (1,7,7-trimethylbicyclo[2.2.1]hept-2-yl) cyclohexan-1-ol (boiling point 308 °C, logP 4.96) as hydrophobic poor solvents were mixed and stirred to obtain the desired poly(amic acid) solution (composition PMDA/ODA:BPDA/PPD = 6:4 (mass ratio), solid content 11.2 parts by mass). Then, a porous polyimide film was obtained in the same manner as in Working Example 1. The thickness of the porous polyimide film was 118.2 pm.

The properties of the obtained porous polyimide film were measured by the same methods as in Working Example 1, and the thermal conductivity was found to be 0.17 W/mK, the dielectric constant (10GHz) was found to be 1.87, the dielectric loss tangent (10GHz) was found to be 0.0101, and the porosity was found to be 65.6 %. In addition, as a result of thermogravimetric analysis, an exothermic peak was confirmed at 370 °C in this porous polyimide film, and the weight loss rate of the porous polyimide film was 1.0 %. In addition, (1,7,7-trimethylbicyclo[2.2.1]hept-2-yl) cyclohexan-1-ol was detected from the porous polyimide film by HPLC mass spectrometry. It was also confirmed that the air permeability of the porous polyimide film was higher than that of 1500 s. Further, when the polyimide film was drilled with a drill having a 0. 3 mm diameter, the drilling was successfully performed without any problem.

Working Example 6

To 91 g of N-methyl-2-pyrrolidone, 6.36 g of 4'-diaminodiphenyl ether (ODA) as an aromatic diamine and 9.07 g of 3,3',4,4'-biphenyltetracarboxylic dianhydride (BPDA) as an aromatic tetracarboxylic dianhydride were added, and the mixture was stirred to obtain a poly(amic acid) solution (composition BPDA/ODA, solid content 14.5 parts by mass). Next, 63.6 g of the poly(amic acid) solution obtained in Working Example 1 (composition PMDA/ODA, solid content 14.5 parts by mass), 42.4 g of the above-mentioned poly(amic acid) solution (composition BPDA/ODA, solid content 14.3 parts by mass), and 30.4 g of (1,7,7-trimethylbicyclo[2.2.1]hept-2-yl) cyclohexan-1-ol (boiling point 308 °C, logP 4.96) as hydrophobic poor solvents were mixed and stirred to obtain the desired poly(amic acid) solution (composition: PMDA/ODA: BPDA/ODA = 6:4 (mass ratio), solid content 11.2 parts by mass). Then, a porous polyimide film was obtained in the same manner as in Working Example 1. The thickness of the porous polyimide film was 115.3 pm.

The properties of the obtained porous polyimide film were measured by the same methods as in Working Example 1, and the thermal conductivity was found to be 0.16 W/mK, the dielectric constant (10GHz) was found to be 1.77, the dielectric loss tangent (10GHz) was found to be 0.0069, and the porosity was found to be 54.2 %. In addition, as a result of thermogravimetric analysis, an exothermic peak was confirmed at 370 °C in this porous polyimide film, and the weight loss rate of the porous polyimide film was 1.0 %. In addition, (1,7,7-trimethylbicyclo[2.2.1]hept-2-yl) cyclohexan-1-ol was detected from the porous polyimide film by HPLC mass spectrometry. It was also confirmed that the air permeability of the porous polyimide film was higher than that of 1500 s. Further, when the porous polyimide film was drilled with a drill having a 0. 3 mm diameter, the drilling was successfully performed without any problem.

Working Example 7

A porous polyimide film was obtained in the same manner as in Working Example 2, except that a porous polyimide film having a film thickness of 253.7 pm was obtained.

The properties of the obtained porous polyimide film were measured by the same methods as in Working Example 1, and the thermal conductivity was found to be 0.13 W/mK, the dielectric constant (10GHz) was found to be 1.59, the dielectric loss tangent (10GHz) was found to be 0.0070, and the porosity was found to be 63.8 %. In addition, as a result of thermogravimetric analysis, an exothermic peak was confirmed at 370 °C in this porous polyimide film, and the weight loss rate of the porous polyimide film was 1.0 %. In addition, (1,7,7-trimethylbicyclo[2.2.1]hept-2-yl) cyclohexan-1-ol was detected from the porous polyimide film by HPLC mass spectrometry. It was also confirmed that the air permeability of the porous polyimide film was higher than that of 1500 s. Further, when the polyimide film was drilled with a drill having a 0. 3 mm diameter, the drilling was successfully performed without any problem.

Working Example 8

A porous polyimide film was obtained in the same manner as in Working Example 1 except that N-methyl-2-pyrrolidone was changed to N, N-dimethylacetamide. At this time, the solid content of the poly(amic acid) solution was 11.2 parts by mass. The thickness of the obtained porous polyimide film was 48 pm.

The properties of the obtained porous polyimide film were measured by the same methods as in Working Example 1, and the thermal conductivity was found to be 0.13 W/mK, the dielectric constant (10GHz) was found to be 1.70, the dielectric loss tangent (10GHz) was found to be 0.0078, and the porosity was found to be 58.7 %. In addition, as a result of thermogravimetric analysis, an exothermic peak was confirmed at 370 °C in this porous polyimide film, and the weight loss rate of the porous polyimide film was 1.0 %. In addition, (1,7,7-trimethylbicyclo[2.2.1]hept-2-yl) cyclohexan-1-ol was detected from the porous polyimide film by HPLC mass spectrometry. It was also confirmed that the air permeability of the porous polyimide film was higher than that of 1500 s. Further, when the porous polyimide film was drilled with a drill having a 0. 3 mm diameter, the drilling was successfully performed without any problem.

(Comparative Example 1)

1. Preparation of Poly(Amic Acid) Solution

To 91 g of N-methyl-2-pyrrolidone, 7.46 g of 4,4'-diaminodiphenyl ether (ODA) as an aromatic diamine and 7.96 g of pyromellitic dianhydride (PMDA) as an aromatic tetracarboxylic dianhydride were added, and the mixture was stirred to obtain a poly(amic acid) solution (composition PMDA/ODA, solid content 14.5 parts by mass). Next, 13. 1 g of glycerin (boiling point 290 °C, logP -1.96) was added as a poor solvent to the poly(amic acid) solution and stirred to obtain the desired poly(amic acid) solution (composition PMDA/ODA, solid content 12.7 parts by mass).

2. Forming of Porous Polyimide Film

The above-mentioned poly(amic acid) solution was cast onto a glass substrate to form a coating film of the poly(amic acid) solution, and the glass plate on which the coating film was formed was put in an oven at 130 °C to dry the coating film for 30 minutes. Next, the glass plate was taken out from the oven, the film formed on the glass substrate was peeled off from the glass substrate and fixed to a tenter, and then the film was put in the oven and the temperature in the oven was raised from 150 °C to 350 °C over 2 hours. After the temperature in the oven reached 350 °C, the temperature was maintained for 20 minutes to bake the film, but the film could not be formed.

(Comparative Example 2)

A desired poly(amic acid) solution and a polyimide film were prepared in the same manner as in Comparative Example 1, except that cyclohexanol (boiling point 161 °C, logP 1.35) was used instead of glycerin, and cyclohexanol was added to the poly(amic acid) so that the solid content of the poly(amic acid) solution was 11.5 parts by mass. The thickness of the obtained porous polyimide film was 39.0 pm.

The porosity of the obtained polyimide film was measured by the same method as in Working Example 1, and the porosity was 0 %, and the polyimide film was not a porous body.

(Comparative Example 3)

A desired poly(amic acid) solution was obtained in the same manner as in Comparative Example 1 except that glycerin was changed to ethylene glycol (boiling point 198 °C, logP -1.53) and ethylene glycol was added to the poly(amic acid) solution so that the solid content of the poly(amic acid) solution was 9.8 parts by mass, and the polyimide film was formed. However, the polyimide film could not be formed.

(Comparative Example 4)

A desired poly(amic acid) solution was obtained in the same manner as in Comparative Example 3 except that ethylene glycol was added to the poly(amic acid) solution so that the solid content of the poly(amic acid) solution was 11.2 parts by mass, and a polyimide film was formed from the poly(amic acid) solution. However, the polyimide film could not be formed.

(Comparative Example 5)

A desired poly(amic acid) solution and a polyimide film were obtained in the same manner as in Comparative Example 1 except that the glycerin was changed to tetraglyme (boiling point 275 °C, logP -0.12), and tetraglyme was added to the poly(amic acid) solution so that the solid content of the poly(amic acid) solution was 11.5 parts by mass. The thickness of the obtained porous polyimide film was 45.0 pm.

The porosity of the obtained polyimide film was measured by the same method as in Working Example 1, and the porosity was 0%, and the polyimide film was not a porous body.

(Comparative Example 6)

A poly(amic acid) solution (composition BPDA/PPD, solid content 20.9 parts by mass) was obtained in the same manner as in Comparative Example 1, except that glycerin was changed to (1,7,7-trimethylbicyclo[2.2.1]hept-2-yl) cyclohexan-1-ol (boiling point 308 °C, logP 4.96), 4,4'-diaminodiphenyl ether (ODA) was changed to paraphenylene diamine (PPD) and the amount thereof was changed to 4.24 g, and pyromellitic dianhydride (PMDA) was changed to 3,3 ',4,4'-biphenyltetracarboxylic dianhydride (BPDA) and the amount thereof was changed to 11.20 g. Further, a polyimide film was formed using the poly(amic acid) solution in the same manner as in Comparative Example 1, but the polyimide film could not be formed.

(Comparative Example 7)

A poly(amic acid) solution (composition BPDA/ODA, solid content 11.2 parts by mass) was obtained in the same manner as in Comparative Example 1, except that the additive amount of 4,4'-diaminodiphenyl ether (ODA) was changed to 6.36 g, and pyromellitic dianhydride (PMDA) was changed to 3,3 ',4,4'-biphenyltetracarboxylic dianhydride (BPDA) and the amount thereof was changed to 9.07 g. Further, a polyimide film was formed using the poly(amic acid) solution in the same manner as in Comparative Example 1, but the polyimide film could not be formed.

(Comparative Example 8)

To 84.7 g of N-methyl-2-pyrrolidone, 7.44 g of 4,4'-diaminodiphenyl ether (ODA) as an aromatic diamine and 7.98 g of pyromellitic dianhydride (PMDA) as an aromatic tetracarboxylic dianhydride were added, and the mixture was stirred to obtain a poly(amic acid) solution (composition PMDA/ODA, solid content 15.3 parts by mass).

The porosity of the obtained polyimide film was measured by the same method as in Working Example 1, and the porosity was 0 %, and the polyimide film was not a porous body. The polyimide film was analyzed by thermogravimetric analysis in the same manner as in Working Example 1, and no exothermic peak was observed between 350 °C and 450 °C (see FIG. 1). The polyimide film had a weight loss of 0.3 %.

**INDUSTRIAL APPLICABILITY**

The method for producing a porous polyimide according to the present invention can provide a porous polyimide which is inexpensive and yet maintains a high porosity of 50 % or more even when the porous polyimide is made relatively thin. The porous polyimide can be suitably used as an electrical insulating film, a frequency selective film or the like in a flexible printed circuit (FPC) or the like.

**Claims**

1. A method for producing a porous polyimide film, comprising: obtaining a porous polyimide film by drying and then baking a poly(amic acid) solution including:

    (a) a poly(amic acid) obtained by polymerizing an aromatic tetracarboxylic dianhydride containing at least pyromellitic dianhydride and an aromatic diamine containing at least 4,4 ' - diaminodiphenyl ether;
    (b) an organic polar solvent that is a good solvent for the poly(amic acid); and
    (c) a hydrophobic solvent that is a poor solvent for the poly(amic acid), dissolves in the organic polar solvent, evaporates less readily than the organic polar solvent at the same temperature and pressure, and has a logP in the range of 4.00 or more and 6.00 or less.

2. The method for producing a porous polyimide film according to claim 1, wherein the hydrophobic solvent has a boiling point at 1 atm in a range of 280 °C or higher and 350 °C or lower.

3. The method for producing a porous polyimide film according to claim 1 or 2, the poly(amic acid) solution contains 60 mass% or more of a poly(amic acid) obtained by a polymerization reaction of the pyromellitic dianhydride and the 4,4'-diaminodiphenyl ether.

4. A porous polyimide film obtained by the method for producing a porous polyimide film according to any one of claims 1 to 3.

5. A porous polyimide film comprising:
    at least a polyimide resin obtained from a poly(amic acid) obtained by polymerizing pyromellitic dianhydride and 4,4'-diaminodiphenyl ether,
    wherein at least a hydrophobic poor solvent remains.

6. A porous polyimide film comprising:

    at least a polyimide resin obtained from a poly(amic acid) obtained by polymerizing pyromellitic dianhydride and 4,4'-diaminodiphenyl ether,
    wherein the porous polyimide film has an exothermic peak in a temperature range of 350 °C to 450 °C when the differential thermal and thermogravimetry (TG/DTA) thereof are measured at a temperature increase rate of 5 °C/min.

[FIG. 1]

[FIG. 2]

# EP 4 455 199 A1

| | INTERNATIONAL SEARCH REPORT | International application No. |
|---|---|---|
| | | **PCT/JP2022/046997** |

**A.    CLASSIFICATION OF SUBJECT MATTER**

*C08J 9/28*(2006.01)i; *C08G 73/10*(2006.01)i
FI:    C08J9/28 CFG; C08G73/10

According to International Patent Classification (IPC) or to both national classification and IPC

**B.    FIELDS SEARCHED**

Minimum documentation searched (classification system followed by classification symbols)

C08J9/28; C08G73/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 6-293834 A (UNITIKA LTD) 21 October 1994 (1994-10-21) claims, examples | 4-6 |
| A | | 1-3 |
| A | JP 2015-52061 A (UBE INDUSTRIES) 19 March 2015 (2015-03-19) entire text | 1-6 |
| A | JP 2001-224934 A (UBE INDUSTRIES) 21 August 2001 (2001-08-21) entire text | 1-6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/046997** |

| Patent document<br>cited in search report | | | Publication date<br>(day/month/year) | Patent family member(s) | Publication date<br>(day/month/year) |
| --- | --- | --- | --- | --- | --- |
| JP | 6-293834 | A | 21 October 1994 | US 5510395 A<br>claims, examples | |
| JP | 2015-52061 | A | 19 March 2015 | (Family: none) | |
| JP | 2001-224934 | A | 21 August 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4945152 A
- JP H9100363 A
- JP H11537 A
- JP H6166116 A